# EUROPÄISCHE PATENTSCHRIFT

(11) **EP 3 611 464 B1**
(45) Veröffentlichungstag und Bekanntmachung des Hinweises auf die Patenterteilung: **22.09.2021**
(21) Anmeldenummer: 18188959.3
(22) Anmeldetag: 14.08.2018
(51) Int. Cl.: G01B 21/04, G01B 3/30

(54) **VERFAHREN ZUR GENAUIGKEITSSTEIGERUNG EINER MESSVORRICHTUNG**
METHOD FOR INCREASING ACCURACY OF A MEASUREMENT DEVICE
PROCÉDÉ POUR AUGMENTER LA PRÉCISION D'UN DISPOSITIF DE MESURE

(43) Veröffentlichungstag der Anmeldung: 19.02.2020
(73) Patentinhaber: QS GRIMM GmbH, 77656 Offenburg/Elgersweier (DE)
(72) Erfinder: GRIMM, Daniel, 77793 Gutach (DE); GRIMM, Volker, 77716 Hofstetten (DE)
(74) Vertreter: Mertzlufft-Paufler, Cornelius

(56) Entgegenhaltungen:
- EP-A2- 1 146 314
- US-A- 4 364 182
- US-A1- 2009 090 013
- US-A1- 2017 363 403

## Beschreibung

Die Erfindung beschreibt ein Verfahren zur zumindest temporären Genauigkeitssteigerung einer Messvorrichtung, mit einem Messmittel, das entlang wenigstens zweier Messachsen verfahrbar und zur Abtastung eines Kalibrierkörpers ausgebildet ist.

Es ist bekannt, Messvorrichtungen zu verwenden, beispielsweise um Abweichungen eines gefertigten Produktes in Bezug auf ein Referenzprodukt festzustellen und zu überwachen.

Solche Messvorrichtungen weisen beispielsweise einen Messtaster auf, der in einem Messraum verfahrbar ist, um Messpunkte aufzunehmen. Dabei wird etwa die Position innerhalb eines Koordinatenraumes oder eine Strecke von einem Startpunkt zu einem Messpunkt bestimmt und mit einem Sollwert verglichen.

Um Messfehler, die die Messvorrichtung selbst bereits erzeugt, zu eliminieren, ist es erforderlich, derartige Messvorrichtungen zu kalibrieren.

Hierzu ist es üblich geworden, bestimmte Kalibriernormale, beispielsweise Kugelplatten, zu verwenden und in unterschiedlichen Aufstellungen in dem Messraum zu platzieren, um einzelne Messachsen auszumessen.

Diese initiale Kalibrierung wird üblicherweise vom Hersteller der Messvorrichtung vor der Auslieferung durchgeführt. Die gemessenen Abweichungen werden in einer Korrekturmatrix hinterlegt. Diese Korrekturmatrix enthält über den Messraum verteilt Korrekturwerte, die Abweichungen der Messvorrichtung kompensieren sollen. Vielmehr als die eigentliche Messabweichung besteht die Schwierigkeit darin, alle theoretischen Messfehler zu bestimmen und anzugeben. Da sich hier in der Regel viele Effekte überlagern und addieren, ist die Bestimmung und Berechnung der Messfehler sehr aufwändig. Für die initiale Kalibrierung und Messfehlerrechnung werden in der Regel etwa 2 bis 7 Tage benötigt.

Nachteilig ist, dass die Messvorrichtung im Laufe ihrer Nutzung Veränderungen insbesondere durch thermische Einflüsse erfahren kann, die eine Veränderung der Korrekturmatrix erfordern würden.

Dies ist jedoch zeitlich so aufwendig, dass dies nur in großen zeitlichen Abständen durchgeführt wird.

Aus der US 2009/0090013 A1 ist ein Verfahren zur Kalibrierung bekannt, das eine bewegliche Messspitze erfordert. Wobei ein bekannter Probenkörper mittels der Messspitze abgetastet wird und abweichende Messwerte in der Korrekturmatrix gespeichert werden.

Aus der US 2017/0363403 A1 ist ein Kalibrierverfahren bekannt, bei dem verschiedene bekannte Probenkörper verwendet werden. Wobei die Messwerte jeweils in der Korrekturmatrix, die zunächst eine dünn besetzte Matrix ist, abgelegt und diese somit mehr und mehr besetzt wird.

Aufgabe der Erfindung ist es, ein Verfahren der eingangs genannten Art zu schaffen, das zumindest temporäre Genauigkeitssteigerung einer Messvorrichtung vereinfacht.

Diese Aufgabe wird erfindungsgemäß durch das Verfahren gemäß Anspruch 1 gelöst. Das Verfahren weist die folgenden Schritte auf, die nacheinander ausgeführt werden:
- Einlegen eines Kalibrierkörpers in den Messraum der Messvorrichtung,
- Ausmessen des Kalibrierkörpers anhand seiner hinterlegten Abmessungen und Ermittlung von Abweichungen zwischen den gemessenen Abmessungen des Kalibrierkörpers und den hinterlegten Abmessungen des Kalibrierkörpers,
- Korrigieren der Korrekturmatrix anhand der ermittelten Abweichungen und Abspeichern der korrigierten Korrekturmatrix als Abweichungsmatrix,Bestimmen der Messfehler der Messvorrichtung.

Wobei das Bestimmen der Messfehler die folgenden Schritte umfasst:
- erneutes Berechnen des Kalibrierkörpers mit der Abweichungsmatrix und
- Ausgabe der Abweichungen zwischen dem berechneten Kalibrierkörper und den hinterlegten Abmessungen des Kalibrierkörpers als Messfehler der Messvorrichtung (1).

Wie bereits oben erwähnt, wird die Korrekturmatrix in einem aufwändigen Messverfahren vom Hersteller ermittelt und in der Messvorrichtung hinterlegt. Die Korrekturmatrix enthält für die bei der initialen Kalibrierung verwendeten Messpunkte die entsprechenden Korrekturwerte, die die Maschinenabweichungen berücksichtigen.

Beim erfindungsgemäßen Verfahren wird nun ein Kalibrierkörper verwendet, der als Messnormal in seinen Abmessungen und den Positionen der Messpunkte exakt definiert ist.

Dieser Kalibrierkörper wird vermessen und die Messwerte gespeichert. Aus den Messwerten können nun die Positionen der initialen Korrekturmatrix bestimmt werden. Da in der Regel die Messpunkte des Kalibierkörpers nicht identisch sind zu den Messpunkten der initialen Kalibrierung, können diese durch interpolierte oder extrapolierte Werte aus den gemessenen Werten des Kalibrierkörpers für die Positionen der Korrekturmatrix berechnet werden.

Dabei ergibt sich eine korrigierte Korrekturmatrix, die als Abweichungsmatrix gespeichert wird. In der Regel ist ein Verändern der in der Messvorrichtung hinterlegten Korrekturmatrix durch einen Anwender nicht vorgesehen. Daher wird die Abweichungsmatrix gespeichert und diese als Korrekturmatrix für spätere Messungen verwendet.

Es werden nun in einem finalen Schritt die Messfehler der Messvorrichtung bestimmt.

Es hat sich hierbei herausgestellt, dass bei der erfindungsgemäßen Anwendung des Verfahrens eine Genauigkeit für die Vermessung eines Probenkörpers erzielt werden kann, die besser ist, als sich durch die Fertigungstoleranzen und dergleichen aus der Maschine selbst ergeben würde.

Dabei werden insbesondere mit der Abweichungsmatrix die Messwerte des Kalibrierkörpers erneut berechnet, wie es normalerweise mit der Korrekturmatrix erfolgen würde.

Die Differenz der so berechneten Werte zu den abgespeicherten Sollwerten des Kalibrierkörpers ergibt als Ergebnis auf einfache Weise den Messfehler der Messvorrichtung. Das bedeutet, dass einerseits mit der Abweichungsmatrix eine Korrektur der Messwerte eines Probenkörpers erfolgen kann. Und zusätzlich der dabei anzugebende Messfehler direkt bekannt ist.

Darüber hinaus ist ein wesentlicher Vorteil dabei, dass lediglich ein Kalibrierkörper einmal vollständig vermessen werden muss. Dieser Vorgang ist in etwa einer bis zwei Stunden erfolgt. Somit kann die erfindungsgemäße Kalibrierung praktisch jederzeit durchgeführt werden.

Das Verfahren kann im Rahmen einer Kalibrierung einer Messvorrichtung verwendet und dann als Verfahren zur Kalibrierung einer Messvorrichtung bezeichnet werden.

In einer vorteilhaften Ausführung wird das Verfahren wiederholt ausgeführt, wobei jeweils die Abweichungsmatrix anstelle der Korrekturmatrix korrigiert wird. Auf diese Weise ist es möglich, zeitliche Veränderungen in der Maschine noch genauer festzustellen, beispielsweise aufgrund von thermischen Belastungen. Eine erneute Kalibrierung ist in nahen zeitlichen Abständen möglich, da die benötigte Zeit sehr gering ist.

Zur vollständigen Erfassung des Messraumes der Messvorrichtung ist es zweckmäßig, wenn die Messpunkte auf den Messachsen gleichmäßig verteilt angeordnet sind und/oder dass die Messpunkte jeweils wenigstens 70%, insbesondere mindestens 90%, der abtastbaren Messachsen abdecken.

Insbesondere vorteilhaft für das Verfahren ist es, wenn an den Messpunkten jeweils eine Kugel angeordnet ist, welche aus Richtungen anfahrbar ist, die mehr als eine Halbkugel beschreiben. Auf diese Weise kann die Position des Kugelmittelpunktes und damit des Messpunktes besonders exakt durch Abtasten der Kugeloberfläche bestimmt werden.

Es hat sich ergeben, dass die thermischen Belastungen in der Regel nicht punktförmig sind, sondern in jeder Raumrichtung ein monotones Gefälle aufweisen. Hieraus ergibt sich im Wesentlichen eine Winkelabweichung von den Raumachsen, die korrigiert werden müssten. Es ist daher zweckmäßig, wenn die Messpunkte des Kalibrierkörpers in einer Reihen- und Spaltenanordnung angeordnet sind. Auf diese Weise ist besonders in den Raumrichtungen eine gute Messung möglich.

Besonders vorteilhaft ist es dabei, wenn die Messpunkte wenigstens eine, insbesondere zwei sich kreuzende, Raumdiagonalen bilden. Aufgrund der Ausmessung dieser Raumdiagonalen lassen sich die Winkelabweichungen der Achsen von den tatsächlichen Gegebenheiten leicht feststellen und abschließend korrigieren.

Besonders vorteilhaft kann es dabei sein, wenn die Raumdiagonalen monoton steigend oder fallend ausgebildet sind.

Die Erfindung ist nachfolgend anhand eines Ausführungsbeispiels mit Bezug auf die beiliegenden Zeichnungen näher erläutert.

Es zeigt:
- Fig. 1:: eine Messvorrichtung, die mit dem erfindungsgemäßen Verfahren kalibriert werden kann,
- Fig. 2:: ein Ablaufdiagramm des erfindungsgemäßen Verfahrens,
- Fig. 3:: eine schematische Ansicht der Lage der Messpunkte einer Korrekturmatrix und beispielhaft die Lage von Messwerten eines Kalibrierkörpers und
- Fig. 4:: ein Kalibrierkörper zur Verwendung in dem erfindungsgemäßen Verfahren

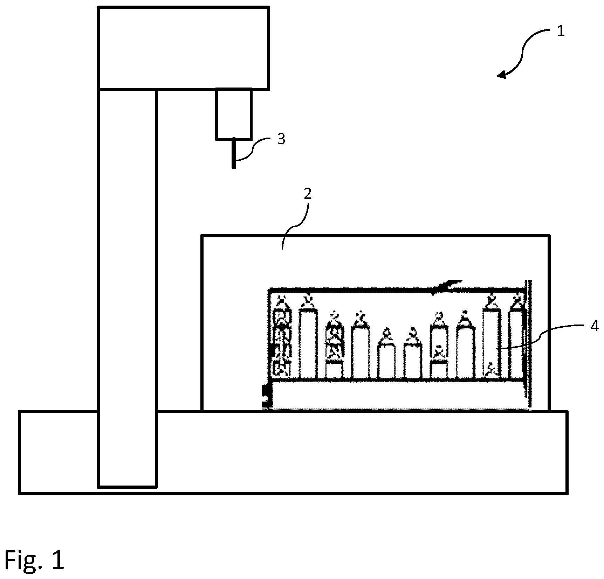

Die Fig. 1 zeigt schematisch eine Messvorrichtung 1 zur Durchführung des erfindungsgemäßen Verfahrens.

Die Messvorrichtung 1 weist einen Messraum 2 zum Einlegen eines zu vermessenden Körpers 4 und einen Messtaster 3, zum Abtasten des Körpers 4 auf. Im Bild ist ein Kalibrierkörper 4 in dem Messraum 2 eingelegt, der jedoch nicht den gesamten Messraum 2 ausfüllt.

Die Messvorrichtung 1 ist in der Regel vom Hersteller kalibriert und besitzt eine Korrekturmatrix, die das gesamte Maschinenvolumen des Messraums abdeckt.

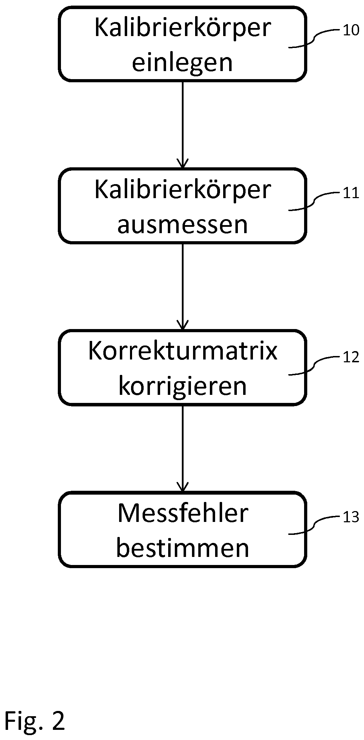

Das erfindungsgemäße Verfahren ist in Bezug auf das Ablaufdiagramm der Fig. 2 nachfolgend erläutert.

Zunächst wird ein Kalibrierkörper 4 in den Messraum 2 der Messvorrichtung 1 eingelegt 10. Anschließend wird der Kalibrierkörper 4 ausgemessen 11.

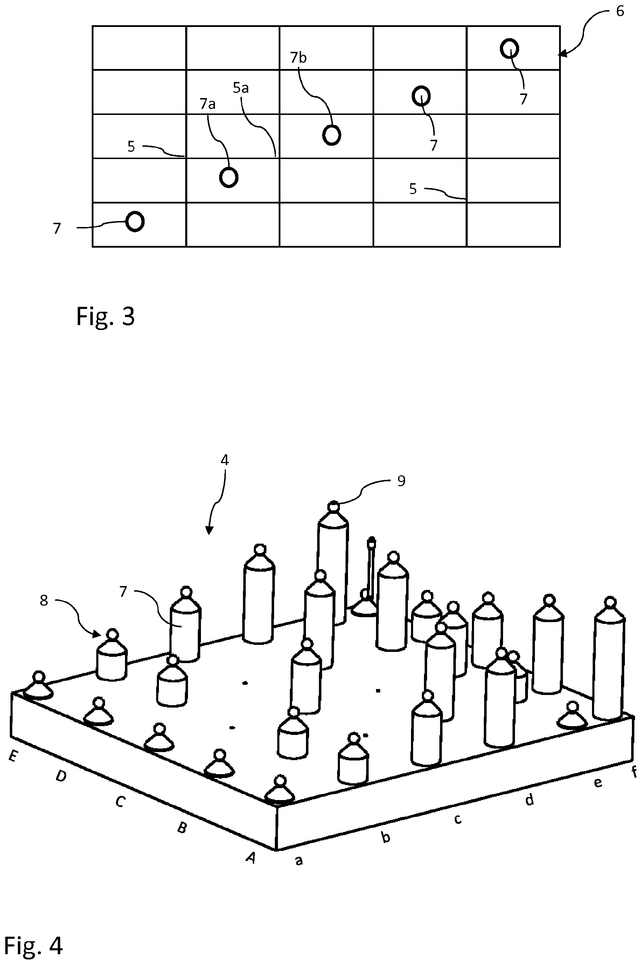

Mit den gemessenen Werten des Kalibrierkörpers 4 wird die im Gerät hinterlegte Korrekturmatrix 6 korrigiert. Die Fig. 3 zeigt schematisch die Lage der Korrekturwerte 5 in der Korrekturmatrix 6. Diese liegen in den Kreuzungspunkten des Gitters. Ein in den Messraum 2 eingelegter Kalibrierkörper 4 besitzt hier beispielhaft eine diagonale Reihe an Messpunkten 7, die jedoch zwischen den Kreuzungspunkten und damit abweichend von der Lage der Korrekturwerte 5 der Korrekturmatrix 6 liegen.

Selbstverständlich kann der Kalibrierkörper 4 eine größere Anzahl an Messpunkten 7 aufweisen. Die Genauigkeit wird in der Regel mit mehreren Messpunkten 7 erhöht. In Fig. 5 ist ein beispielhafter Kalibrierkörper 4 gezeigt, wie er tatsächlich eingesetzt werden kann. Der Kalibrierkörper besitzt fünf Reihen A-E und sechs Spalten a-f an Messpunkten 7. Die Messpunkte 7 weisen an ihren freien Enden 8 jeweils eine Kugel 9 auf, die aus Richtungen anfahrbar sind, die mehr als eine Halbkugel beschreiben.

Insbesondere weist der Kalibrierkörper 4 zwei Diagonalen mit jeweils monoton steigenden Messpunkten 7 auf, die besonders vorteilhaft zur Bestimmung von Winkelabweichungen geeignet sind.

Wichtig dabei ist, dass die Abmessungen des Kalibrierkörpers 4 sehr genau bekannt sind. Dazu kann der Kalibrierkörper 4 einmalig exakt vermessen und geeicht werden, beispielsweise durch die Physikalisch-Technische Bundesanstalt.

Ausgehend von benachbarten Messwerten 7 des Kalibrierkörpers 4 werden nun die Positionen der Kreuzungspunkte, also der Korrekturwerte 5 neu berechnet. Dazu werden die Messwerte 7 interpoliert und/oder extrapoliert. Als Beispiel wird der korrigierte Kreuzungspunkt 5a mit den Messwerten 7a und 7b ermittelt.

Auf diese Weise wird eine Abweichungsmatrix erstellt, die einer korrigierten Korrekturmatrix entspricht. Besonders vorteilhaft ist es dabei, wenn der Kalibrierkörper 4 eine ähnliche Anzahl an Messpunkten 7 aufweist, wie die Korrekturmatrix 6 Korrekturwerte 5 besitzt.

In einem letzten Schritt wird nun der Kalibrierkörper 4 mit Hilfe der Abweichungsmatrix erneut berechnet. Dadurch ergeben sich nun die korrigierten Messpunkte des Kalibrierkörpers 4, wobei die korrigierte Korrekturmatrix, also die Abweichungsmatrix für eine Korrektur der Messwerte verwendet wird.

Die gesuchten Messfehlerangaben können nun einfach aus den Differenzen zwischen den so berechneten korrigierten Messpunkten 7 und den gespeicherten Angaben des Kalibrierkörpers 4 bestimmt werden.

Auf diese Weise kann sogar eine höhere Genauigkeit erzielt werden, als es die Fertigungstoleranzen der Messvorrichtung 1 eigentlich erlauben.

Diese Messfehler enthalten auf einfache Weise alle in der Messvorrichtung 1 eventuell möglichen Messfehler, also beispielsweise Positionsfehler der Messachsen oder Temperaturausdehnung. Die benötigte Zeit für das erfindungsgemäße Verfahren ist dabei nur von der Größe und Komplexität des Kalibrierkörpers 4 abhängig, da dieser lediglich einmal normal vermessen werden muss. Dieser Vorgang dauert etwa 1 bis 2 Stunden. Dadurch ist die erfindungsgemäße Kalibrierung mindestens um eine Größenordnung schneller als bislang im Stand der Technik möglich und kann daher häufiger durchgeführt werden. Insbesondere kann diese Kalibrierung auch vom Anwender durchgeführt werden.

Insbesondere kann die Kalibrierung periodisch oder in Intervallen wiederholt werden, wobei jedesmal die Abweichungsmatrix korrigiert wird und die ursprüngliche Korrekturmatrix 6 nicht mehr benötigt oder berücksichtigt wird.

### Bezugszeichenliste

- 1: Messvorrichtung
- 2: Messraum
- 3: Messtaster
- 4: Kalibrierkörper
- 5: Korrekturwerte
- 6: Korrekturmatrix
- 7: Messpunkte des Kalibrierkörpers
- 8: freies Ende
- 9: Kugel
- 10: Kalibrierkörper einlegen
- 11: Kalibrierkörper ausmessen
- 12: Korrekturmatrix korrigieren
- 13: Messfehler bestimmen

## Patentansprüche

1. Verfahren zur zumindest temporären Genauigkeitssteigerung einer Messvorrichtung (1), mit einem Messraum (2) und einem Messmittel (3), das entlang wenigstens zweier Messachsen verfahrbar und zur Abtastung eines Körpers ausgebildet ist, wobei in der Messvorrichtung (1) eine Korrekturmatrix (6) hinterlegt ist, mit welcher die vom Messmittel (3) aufgenommenen Messwerte (7) korrigiert werden,
umfassend die Verfahrensschritte:
Einlegen (10) eines Kalibrierkörpers (4) in den Messraum (2) der Messvorrichtung (1),
Ausmessen (11) des Kalibrierkörpers (4) anhand seiner hinterlegten Abmessungen und Ermittlung von Abweichungen zwischen den gemessenen Abmessungen des Kalibrierkörpers (4) und den hinterlegten Abmessungen (11) des Kalibrierkörpers (4),
Korrigieren (12) der Korrekturmatrix (6) anhand der ermittelten Abweichungen und Abspeichern der korrigierten Korrekturmatrix als Abweichungsmatrix,
**gekennzeichnet durch** die Verfahrensschritte:
Bestimmen (13) der Messfehler der Messvorrichtung (1), wobei das Bestimmen (13) der Messfehler die folgenden Schritte umfasst:
erneutes Berechnen des Kalibrierkörpers (4) mit der Abweichungsmatrix und
Ausgabe der Abweichungen zwischen dem berechneten Kalibrierkörper (4) und den hinterlegten Abmessungen des Kalibrierkörpers (4) als Messfehler der Messvorrichtung (1) .

2. Verfahren nach Anspruch 1, **dadurch gekennzeichnet, dass** das Verfahren wiederholt ausgeführt wird, wobei jeweils die Abweichungsmatrix anstelle der Korrekturmatrix (6) korrigiert wird.

3. Verfahren nach einem der Ansprüche 1 oder 2, **dadurch gekennzeichnet, dass** beim Ausmessen des Kalibrierkörpers (4) die Messpunkte (7) auf den Messachsen gleichmäßig verteilt angeordnet sind und/oder dass die Messpunkte (7) jeweils wenigstens 70% der abtastbaren Messachsen abdecken.

4. Verfahren nach einem der Ansprüche 1 bis 3, **dadurch gekennzeichnet, dass** beim Ausmessen des Kalibrierkörpers (4) an den Messpunkten (7) jeweils eine Kugel (9) angeordnet ist, welche aus Richtungen anfahrbar ist, die mehr als eine Halbkugel beschreiben.

5. Verfahren nach einem der Ansprüche 1 bis 4, **dadurch gekennzeichnet, dass** beim Ausmessen des Kalibrierkörpers (4) die Messpunkte (7) des Kalibrierkörpers (4) in einer Reihen- (A-E) und Spaltenanordnung (a-f) angeordnet sind.

6. Verfahren nach einem der Ansprüche 1 bis 5, **dadurch gekennzeichnet, dass** beim Ausmessen des Kalibrierkörpers (4) die Messpunkte (7) wenigstens eine, insbesondere zwei sich kreuzende, Raumdiagonalen bilden.

7. Verfahren nach Anspruch 6, **dadurch gekennzeichnet, dass** beim Ausmessen des Kalibrierkörpers (4) die Messpunkte (7) auf den Raumdiagonalen monoton steigend oder fallend ausgebildet sind.

## Claims

1. Method for at least temporarily increasing the accuracy of a measurement apparatus (1), having a measurement space (2) and a measurement means (3), which is displaceable along at least two measurement axes and is designed for sensing a body, wherein a correction matrix (6), with which the measurement values (7) recorded by the measurement means (3) are corrected, is stored in the measurement apparatus (1),
comprising the method steps of:
placing (10) a calibration body (4) into the measurement space (2) of the measurement apparatus (1),
measuring (11) the calibration body (4) using its stored dimensions and ascertaining deviations between the measured dimensions of the calibration body (4) and the stored dimensions (11) of the calibration body (4),
correcting (12) the correction matrix (6) using the ascertained deviations and storing the corrected correction matrix as deviation matrix,
**characterized by** the method steps of:
determining (13) the measurement errors of the measurement apparatus (1), wherein determining (13) the measurement errors comprises the following steps:
re-calculating the calibration body (4) with the deviation matrix and
outputting the deviations between the calculated calibration body (4) and the stored dimensions of the calibration body (4) as measurement errors of the measurement apparatus (1).

2. Method according to Claim 1, **characterized in that** the method is carried out repeatedly, wherein in each case the deviation matrix is corrected rather than the correction matrix (6).

3. Method according to either of Claims 1 and 2, **characterized in that**, when the calibration body (4) is measured, the measurement points (7) are arranged uniformly distributed on the measurement axes and/or **in that** the measurement points (7) each cover at least 70% of the measurement axes that are able to be sensed.

4. Method according to one of Claims 1 to 3, **characterized in that**, when the calibration body (4) is measured, in each case one sphere (9) is arranged at the measurement points (7), which is able to be approached from directions that describe more than a hemisphere.

5. Method according to one of Claims 1 to 4, **characterized in that**, when the calibration body (4) is measured, the measurement points (7) of the calibration body (4) are arranged in a row (A-E) and column (a-f) arrangement.

6. Method according to one of Claims 1 to 5, **characterized in that**, when the calibration body (4) is measured, the measurement points (7) form at least one and in particular two intersecting space diagonals.

7. Method according to Claim 6, **characterized in that**, when the calibration body (4) is measured, the measurement points (7) are formed to be monotonically increasing or decreasing along the space diagonals.

## Revendications

1. Procédé pour augmenter au moins temporairement la précision d'un dispositif de mesure (1), comprenant un espace de mesure (2) et un moyen de mesure (3) qui peut être déplacé le long d'au moins deux axes de mesure et qui est conçu de manière à balayer un corps, dans lequel une matrice de correction (6) est mise en mémoire dans le dispositif de mesure (1), matrice à l'aide de laquelle les valeurs de mesure (7) enregistrées par le moyen de mesure (3) sont corrigées, et comprenant les étapes suivantes :
insérer (10) un corps d'étalonnage (4) à l'intérieur de l'espace de mesure (2) du dispositif de mesure (1),
mesurer (11) le corps d'étalonnage (4) sur la base de ses dimensions mises en mémoire et identifier les écarts entre les dimensions mesurées du corps d'étalonnage (4) et les dimensions (11) mises en mémoire du corps d'étalonnage (4), et
corriger (12) la matrice de correction (6) sur la base des écarts identifiés et mettre en mémoire la matrice de correction corrigée en tant que matrice d'écart,
**caractérisé par** l'étape suivante :
déterminer (13) les erreurs de mesure du dispositif de mesure (1), dans lequel la détermination (13) des erreurs de mesure comprend les étapes suivantes :
recalculer le corps d'étalonnage (4) à l'aide de la matrice d'écart, et
sortir les écarts entre le corps d'étalonnage (4) calculé et les dimensions mises en mémoire du corps d'étalonnage (4) en tant qu'erreurs de mesure du dispositif de mesure (1).

2. Procédé selon la revendication 1, **caractérisé en ce que** le procédé est mis en œuvre de manière répétée, dans lequel la matrice d'écart est respectivement corrigée à la place de la matrice de correction (6).

3. Procédé selon l'une quelconque des revendications 1 ou 2, **caractérisé en ce que**, lors de la mesure du corps d'étalonnage (4), les points de mesure (7) sont disposés avec une répartition uniforme sur les axes de mesure et/ou **en ce que** les points de mesure (7) couvrent respectivement au moins 70 % des axes de mesure qui peuvent être balayés.

4. Procédé selon l'une quelconque des revendications 1 à 3, **caractérisé en ce que**, lors de la mesure du corps d'étalonnage (4), une sphère (9) est disposée respectivement au niveau des points de mesure (7), ladite sphère pouvant être atteinte à partir de directions qui définissent plus d'une demi-sphère.

5. Procédé selon l'une quelconque des revendications 1 à 4, **caractérisé en ce que**, lors de la mesure du corps d'étalonnage (4), les points de mesure (7) du corps d'étalonnage (4) sont disposés en un agencement de rangées (A-E) et de colonnes (a-f).

6. Procédé selon l'une quelconque des revendications 1 à 5, **caractérisé en ce que**, lors de la mesure du corps d'étalonnage (4), les points de mesure (7) forment au moins une, en particulier deux diagonales spatiales qui se croisent.

7. Procédé selon la revendication 6, **caractérisé en ce que**, lors de la mesure du corps d'étalonnage (4), les points de mesure (7) sont conçus de manière à monter ou à descendre de manière monotone sur les diagonales spatiales.
